# FASCICULE DE BREVET EUROPEEN

(11) **EP 3 502 504 B1**
(45) Date de publication et mention de la délivrance du brevet: **26.02.2020**
(21) Numéro de dépôt: 18212747.2
(22) Date de dépôt: 14.12.2018
(51) Int. Cl.: F16D 25/0638, F16D 25/12

(54) **MODULE DE TRANSMISSION DE COUPLE DESTINE A EQUIPER UNE TRANSMISSION D'UN VEHICULE AUTOMOBILE**
DREHMOMENT-ÜBERTRAGUNGSMODUL ZUR AUSRÜSTUNG EINER ÜBERSETZUNG EINES KRAFTFAHRZEUGS
TORQUE TRANSMISSION MODULE INTENDED FOR BEING PROVIDED ON A TRANSMISSION OF A MOTOR VEHICLE

(30) Priorité: 21.12.2017 FR 1762812
(43) Date de publication de la demande: 26.06.2019
(73) Titulaire: Valeo Embrayages, 80009 Amiens Cedex 2 (FR)
(72) Inventeur: DHALLEINE, Christophe, 80009 Amiens (FR); ARHAB, Rabah, 80009 Amiens (FR)
(74) Mandataire: Vincent, Catherine Marie Marguerite

(56) Documents cités:
- EP-A1- 2 998 602
- DE-A1-102016 207 274
- US-A- 4 126 201

## Description

La présente invention concerne un module de transmission de couple destiné à équiper une transmission d'un véhicule automobile.

Un tel module de transmission de couple est destiné à constituer une partie d'une transmission, notamment pour un véhicule automobile ou pour un véhicule dit industriel, ce dernier étant par exemple un poids lourd, un véhicule de transport en commun, ou un véhicule agricole.

La présente invention concerne plus particulièrement un module de transmission de couple comportant un double embrayage humide mobile en rotation autour d'un axe de rotation (X), qui est commandé pour accoupler sélectivement un arbre menant d'un moteur à explosion à un premier arbre mené et à un deuxième arbre mené d'une boite de vitesses,
ledit mécanisme à double embrayage humide comportant au moins un premier embrayage et un deuxième embrayage respectivement de type multidisques, chacun desdits premier et deuxième embrayages comportant au moins un piston mobile axialement qui est commandé en déplacement au moyen d'une chambre de commande à laquelle est associée une chambre d'équilibrage délimitée au moins par un piston d'équilibrage, ledit piston venant serrer axialement dans une position embrayée un ensemble multidisques contre des moyens de réaction, ledit ensemble multidisques comportant au moins des disques de friction liés en rotation à un porte-disques extérieur et des flasques qui sont liés en rotation par au moins un porte-disques intérieur à l'un desdits premier et deuxième arbres menés. Chacun des embrayages est alimenté en huile haute et basse pression à l'aide d'un moyeu central pivotant autour d'un support de moyeu. Le support de moyeu supporte en rotation le mécanisme à double embrayage humide et transporte l'huile haute et basse pression depuis les pompes d'alimentation haute et basse pression jusqu'aux canaux usinés dans le moyeu central.

La demande de brevet EP 2998602 A1 divulgue un tel module de transmission de couple destiné à équiper une transmission de véhicule automobile. Le module comprend notamment un couvercle, un mécanisme à double embrayage humide mobile en rotation autour d'un axe, et un carter d'embrayage comportant un dispositif de distribution d'huile destiné à alimenter le double embrayage humide en huile. Le dispositif comprend les pompes à haute et basse pression qui sont supportées directement par le carter d'embrayage. Le dispositif comprend également des canaux d'alimentation en huile haute et basse pression formés directement dans le carter d'embrayage.

Dans ce module, le couvercle et le carter d'embrayage sont assemblés de manière à former un boîtier définissant un logement dans lequel est reçu en partie le mécanisme à double embrayage humide. Le boîtier ainsi formé est reçu dans la cloche d'embrayage de la transmission. Le mécanisme à double embrayage humide présente une architecture dissymétrique dans laquelle le moyeu central pivote autour d'un seul support de moyeu fixé sur le carter d'embrayage. L'alimentation en huile est alors réalisée par le support de moyeu connecté directement aux canaux d'alimentation usinés dans le carter d'embrayage. Le couvercle du module ne participe pas à l'alimentation en huile.

Une telle architecture dissymétrique présente cependant des inconvénients. En effet, le support d'embrayage est une pièce complexe à réaliser du fait qu'elle cumule différentes fonctions comme supporter en rotation le mécanisme et participer à l'alimentation en huile haute et basse pression des embrayages. Le nombre important d'usinages réalisés enchérie le cout général du support de moyeu.

Le support de moyeu est fixé exclusivement sur le carter d'embrayage. Le poids du mécanisme à double embrayage humide est en porte-à-faux par rapport à la zone de fixation du support de moyeu. Le support de moyeu subit alors des contraintes mécaniques de flexion importantes.

Le but de la présente invention est notamment de proposer un module de transmission de couple comportant un mécanisme à double embrayage humide permettant de résoudre au moins une partie de certains inconvénients de l'art antérieur.

Dans ce but, l'invention propose un module de transmission de couple destiné à équiper une transmission de véhicule automobile, comprenant:
- un couvercle,
- un mécanisme à double embrayage humide mobile en rotation autour d'un axe (X), et
- un carter d'embrayage, comportant un dispositif de distribution d'huile destiné à alimenter le double embrayage humide en huile,
le couvercle et le carter d'embrayage étant assemblés de manière à former un boîtier définissant un logement dans lequel est reçu en partie le mécanisme à double embrayage humide, le boîtier étant apte à être reçu en tout ou partie dans une cloche d'embrayage de la transmission,
et le mécanisme à double embrayage étant alimenté en huile à partir d'au moins un canal d'alimentation en huile formé dans le carter d'embrayage qui communique avec au moins une canalisation d'huile formée en tout ou partie dans le couvercle.

Ce module de transmission de couple, selon l'invention, présente l'avantage, de proposer un sous-ensemble indépendant de la cloche d'embrayage dans lequel l'alimentation en huile du mécanisme à double embrayage humide est simplifié. Les canaux et canalisations sont formés sur les deux composants du boîtier de sorte que l'alimentation en huile s'effectue de part et d'autre du mécanisme à double embrayage humide.

Le mécanisme à double embrayage humide peut comprendre un premier embrayage et un deuxième embrayage respectivement de type multidisques, commandés pour accoupler sélectivement un arbre menant à un premier arbre mené et à un deuxième arbre mené, les premier et deuxième embrayages étant disposés axialement l'un à coté de l'autre,

le premier embrayage étant alimenté en huile à partir d'une canalisation d'huile du couvercle et le deuxième embrayage étant alimenté en huile à partir d'un canal d'alimentation en huile du carter d'embrayage. Ce module de transmission de couple, selon l'invention, présente l'avantage, de découpler les réseaux d'alimentation en huile des deux embrayages par des canalisations et canaux répartis distinctement entre le couvercle et le carter d'embrayage. L'espace disponible autour du boîtier permet d'augmenter la section des canaux et canalisations et ainsi d'optimiser le débit d'huile basse pression.

Avantageusement, l'alimentation en huile du premier embrayage est séparée du mécanisme à double embrayage humide.

Avantageusement, l'alimentation en huile du premier embrayage est séparée de la cloche d'embrayage de la transmission.

Avantageusement, le boîtier formé par le couvercle et le carter d'embrayage est fixe en rotation par rapport au mécanisme à double embrayage humide.

De préférence, ledit couvercle, le mécanisme à double embrayage humide et le carter d'embrayage sont pré-montés pour former un ensemble unitaire.

Ce module de transmission de couple, selon l'invention, présente l'avantage, grâce au pré-montage pour former un ensemble unitaire, d'éviter une étape de contrôle supplémentaire lors de l'assemblage de la transmission en usine, ce qui permet de ne pas perturber la ligne de fabrication du constructeur du véhicule. Le module de transmission de couple peut être testé fonctionnellement chez le fabriquant du module et non plus chez le constructeur du véhicule.

L'invention peut présenter l'une ou l'autre des caractéristiques décrite ci-dessous combinée entre elles ou prises indépendamment les unes des autres.

Le premier embrayage peut être alimenté en huile haute pression à partir d'un premier canal d'alimentation en huile du carter d'embrayage qui communique avec une première canalisation d'huile du couvercle.

Le premier embrayage peut être alimenté en huile basse pression à partir d'un deuxième canal d'alimentation en huile du carter d'embrayage qui communique avec une deuxième canalisation d'huile du couvercle.

Le deuxième embrayage peut être alimenté en huile haute pression à partir d'un troisième canal d'alimentation en huile du carter d'embrayage.

Le deuxième embrayage peut être alimenté en huile basse pression à partir d'un quatrième canal d'alimentation en huile du carter d'embrayage.

Les canalisations d'huile haute et basse pression peuvent s'étendre transversalement le long de la paroi du couvercle.

La paroi de la canalisation d'huile peut être formée en tout ou partie sur la paroi externe du couvercle.

La paroi de la canalisation d'huile peut être formée en tout ou partie sur la paroi interne du couvercle.

Les canalisations d'huile peuvent être obtenues directement de moulage, par exemple par fonderie avec noyaux de sable ou par fonderie à la cire perdue.

Les canalisations d'huile peuvent être obtenues par usinage, par exemple par fraisage et/ ou perçage.

Les canalisations d'huile haute et basse pression peuvent s'étendre transversalement de part et d'autre du couvercle.

Le mécanisme à double embrayage humide peut comporter un arbre cannelé d'entrée de couple s'étendant axialement vers l'extérieur du module et traversant le couvercle.

L'arbre cannelé d'entrée de couple peut comporter au moins un perçage de circulation d'huile communiquant avec une canalisation d'huile du couvercle. De cette manière, le ou les perçages de circulation d'huile de l'arbre cannelé alimentent en huile haute ou basse pression le premier embrayage.

En variante, le mécanisme à double embrayage humide peut comporter un moyeu de transmission de couple supportant radialement les premier et deuxième embrayages.

Le moyeu de transmission de couple peut comporter au moins un perçage de circulation d'huile communiquant avec une canalisation d'huile du couvercle. De cette manière, le ou les perçages de circulation d'huile du moyeu de transmission de couple alimentent en huile haute ou basse pression le premier embrayage.

Le canal d'alimentation en huile et la canalisation d'huile peuvent être raccordés au niveau du plan de liaison du carter d'embrayage et du couvercle.

Le raccord du canal d'alimentation en huile et de la canalisation d'huile peut être rendu étanche au moyen d'un joint d'étanchéité.

Le canal d'alimentation en huile et la canalisation d'huile peuvent communiquer ensemble par l'intermédiaire d'une conduite d'huile externe et raccordée aux extrémités du canal d'alimentation et de la canalisation d'huile.

La conduite d'huile externe peut passer au travers du plan de liaison du carter d'embrayage et du couvercle.

La conduite d'huile peut comprendre des matériaux plastiques, métalliques et/ou silicones.

La conduite d'huile peut comprendre un raccord à encliquetage.

L'invention peut présenter également l'une ou l'autre des caractéristiques décrite ci-dessous combinée entre elles ou prises indépendamment les unes des autres.

Selon l'exemple de mise en œuvre de l'invention, le dispositif de distribution d'huile peut comprendre au moins une pompe supportée en tout ou partie par le carter d'embrayage.

Avantageusement, le carter d'embrayage peut supporter une pompe basse pression d'alimentation en huile.

Avantageusement, le carter d'embrayage peut supporter une pompe haute pression d'alimentation en huile.

Le support en tout ou partie des pompes haute pression et/ou basse pression par le carter d'embrayage permet de réduire les couts de fabrication et d'augmenter la fiabilité générale du module de transmission de couple.

Le mécanisme à double embrayage humide présente une enveloppe externe de forme générale de révolution.

Le couvercle, en forme générale de cloche, peut présenter une première ouverture située sur le sommet du couvercle et agencée pour le passage de l'arbre cannelé d'entrée de couple.

Avantageusement, le couvercle peut comporter une première zone d'appui circulaire, aménagée sur une couronne annulaire externe et agencée pour venir en appui sur la cloche d'embrayage de la transmission de véhicule automobile.

Le couvercle, en forme générale de cloche, peut présenter une deuxième ouverture délimitée sur son bord par une deuxième couronne annulaire et située sur l'embase du couvercle.

Avantageusement, le couvercle peut comporter une deuxième zone d'appui circulaire agencée pour venir en appui sur le carter d'embrayage de la transmission de véhicule automobile.

La deuxième zone d'appui peut comporter une surface cylindrique interne de centrage du couvercle sur le carter d'embrayage suivant l'axe (X).

Avantageusement, les première et deuxième ouvertures du couvercle sont circulaires et concentriques autour de l'axe (X).

Le couvercle peut être réalisé en matière acier ou aluminium.

Le couvercle et le carter d'embrayage peuvent être liés entre eux par l'intermédiaire du serrage d'une série de premières vis de fixation.

Un joint d'étanchéité peut être disposé entre le couvercle et le carter d'embrayage et écrasé par le serrage de la série de premières vis de fixation.

Le carter d'embrayage, en forme générale de cloche, peut présenter une première ouverture située sur le sommet du carter d'embrayage et agencée pour le passage des arbres de la boite de vitesses de la transmission de véhicule automobile.

Le carter d'embrayage, en forme générale de cloche, peut alors présenter une deuxième ouverture délimitée sur son bord par une couronne annulaire et située sur l'embase du carter d'embrayage.

Avantageusement, la couronne annulaire peut présenter une série de trous taraudés apte à recevoir la série de premières vis de fixation.

Avantageusement, les première et deuxième ouvertures du carter d'embrayage sont circulaires et concentriques autour de l'axe (X).

Le carter d'embrayage, peut également présenter une troisième ouverture, en forme générale d'arc de cercle, aménagée sur le flan du carter d'embrayage et dont le bord radialement externe délimitant ladite troisième ouverture est tangent à la couronne annulaire.

Avantageusement, le bord radialement externe de la troisième ouverture peut être disposé par rapport à l'axe (X) sur un diamètre supérieur ou égal à l'enveloppe externe du mécanisme à double embrayage humide.

Cette troisième ouverture présente l'avantage d'éviter que de l'huile stagnante au fond du module de transmission de couple ne vienne en contact avec le mécanisme à double embrayage humide. On limite ainsi le couple de trainée et on améliore le rendement général de la transmission de couple.

De préférence, le carter d'embrayage peut être réalisé en matière acier ou aluminium.

Avantageusement, le carter d'embrayage du module de transmission de couple comporte une première zone d'appui circulaire, aménagée sur la couronne annulaire du carter d'embrayage et agencée pour venir en appui sur le couvercle.

Le dispositif de distribution d'huile peut comporter une boite de dérivation d'huile supportée en tout ou partie par le carter d'embrayage.

La boite de dérivation d'huile peut comporter au moins un canal d'alimentation en huile destiné à acheminer l'huile depuis l'extérieur du module de transmission de couple jusqu'au mécanisme à double embrayage humide.

Avantageusement, la boite de dérivation d'huile peut entourer partiellement la première ouverture du carter d'embrayage.

La boite de dérivation d'huile peut comporter des canaux d'alimentation en huile répartis circonférentiellement autour de la première ouverture du carter d'embrayage.

Le mécanisme à double embrayage humide peut comporter un moyeu central disposé axialement à l'opposé de l'arbre cannelé d'entrée de couple et traversant le carter d'embrayage au niveau de la première ouverture.

Le moyeu central peut comporter des perçages de circulation d'huile communiquant avec les troisième et quatrième canaux d'alimentation en huile du carter d'embrayage. De cette manière, les perçages de circulation d'huile du moyeu central alimentent en huile le deuxième embrayage.

L'invention a également pour objet, selon un autre aspect, de proposer un ensemble de transmission, notamment pour un véhicule automobile, comportant au moins :
- une cloche d'embrayage, et
- le module de transmission de couple tel que défini ci-dessus.

Avantageusement, le couvercle comporte une zone d'appui aménagée sur la périphérie externe du couvercle et venant en appui sur la cloche d'embrayage.

L'ensemble de transmission présente l'avantage d'apporter un montage simplifié du mécanisme à double embrayage humide lors de l'assemblage de la transmission en usine. Le montage est effectué à l'aide de vis de fixation conventionnelles.

L'invention a également pour objet, selon un autre aspect, de proposer une transmission, notamment pour un véhicule automobile, pour lier sélectivement en rotation au moins un arbre mené de la boîte de vitesses à un arbre menant du moteur à explosion, ladite transmission comportant au moins :
- un volant moteur lié en rotation à l'arbre menant,
- un mécanisme de filtration des acyclismes,
- une boite de vitesses,

laquelle transmission comporte le module de transmission de couple selon l'invention.

Avantageusement, le module de transmission de couple est agencé axialement entre le volant moteur et la boîte de vitesses.

De préférence, l'arbre cannelé d'entrée de couple du mécanisme à double embrayage humide est lié en rotation avec le mécanisme de filtration des acyclismes.

L'invention sera mieux comprise à la lecture de la description qui va suivre, donnée uniquement à titre d'exemple et faite en se référant aux dessins annexés dans lesquels :
- la figure 1 est une vue en perspective d'une chaine cinématique de transmission comportant un module de transmission de couple selon un mode de mise en œuvre privilégié de l'invention ;
- la figure 2 est une vue en coupe de la chaine cinématique de transmission et du module de transmission de couple passant par l'axe X de la figure 1 ;
- la figure 3 est une vue en perspective du module de transmission de couple de la figure 1 ;
- la figure 4 est une vue en perspective du module de transmission de couple et de la cloche d'embrayage de la figure 1 ;
- la figure 5 est une autre vue en coupe de la chaine cinématique de transmission et du module de transmission de couple de la figure 1 ;
- la figure 6 est une vue en coupe de la chaine cinématique de transmission et du module de transmission de couple selon un deuxième mode de mise en œuvre privilégié de l'invention;

Dans la suite de la description et les revendications, on utilisera à titre non limitatif et afin d'en faciliter la compréhension, les termes « avant » ou « arrière » selon la direction par rapport à une orientation axiale déterminée par l'axe X principal de rotation de la transmission du véhicule automobile et les termes « intérieur / interne » ou « extérieur / externe » par rapport à l'axe X et suivant une orientation radiale, orthogonale à ladite orientation axiale.

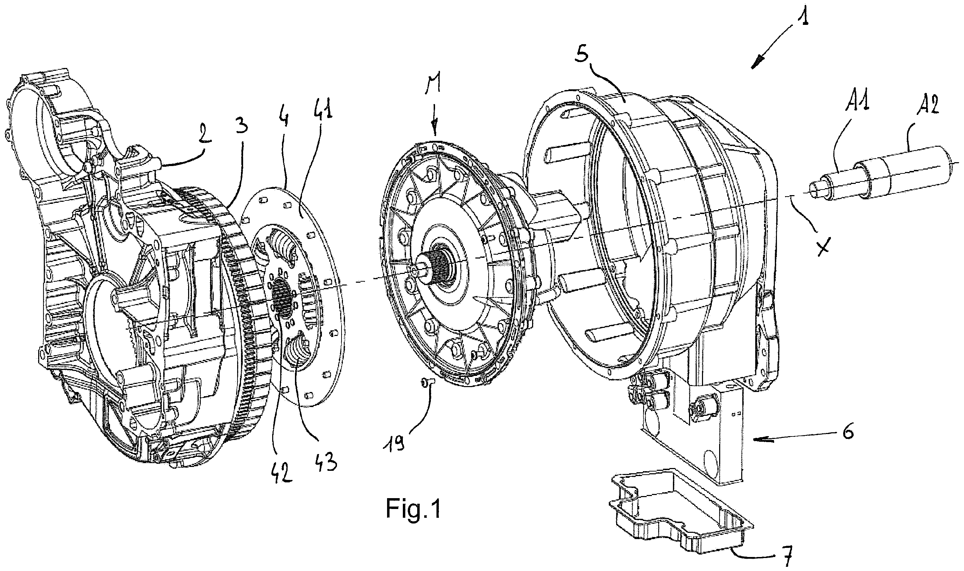

On a représenté sur la figure 1 une transmission 1 d'un véhicule automobile comprenant :
- un carter de moteur à explosion 2,
- un volant moteur 3,
- un mécanisme de filtration des acyclismes 4 coopérant avec le volant moteur 3,
- un module de transmission de couple M,
- une cloche d'embrayage 5 associée au carter de moteur à explosion 2,
- une servocommande 6,
- un carter d'huile 7,
- deux arbres A1, A2 menés d'une boite de vitesses (non représentée) associés au module de transmission de couple M.

Le module de transmission de couple M, la cloche d'embrayage 5 et le carter d'huile 7 sont assemblés de manière à former un contenant dans lequel est reçu la servocommande 6. La servocommande 6 est fixée sur le module de transmission de couple M. Le carter d'huile 7 est fixé sur la cloche d'embrayage 5 par l'intermédiaire du serrage de vis de fixation (non représentées).

La transmission du couple moteur depuis le volant moteur vers la boite de vitesses se fait par un mécanisme de filtration des acyclismes 4. Le mécanisme de filtration des acyclismes 4 comprend de manière traditionnelle un voile primaire 41 lié en rotation sur le volant moteur 3 par l'intermédiaire de vis de fixation. Le voile primaire 41 est lié par des ressorts hélicoïdaux 43 à un organe secondaire constitué par deux rondelles de guidage solidaire d'un moyeu cannelé 42. Le moyeu cannelé 42 est lié en rotation avec un arbre cannelé 15 d'entrée de couple du module de transmission de couple M.

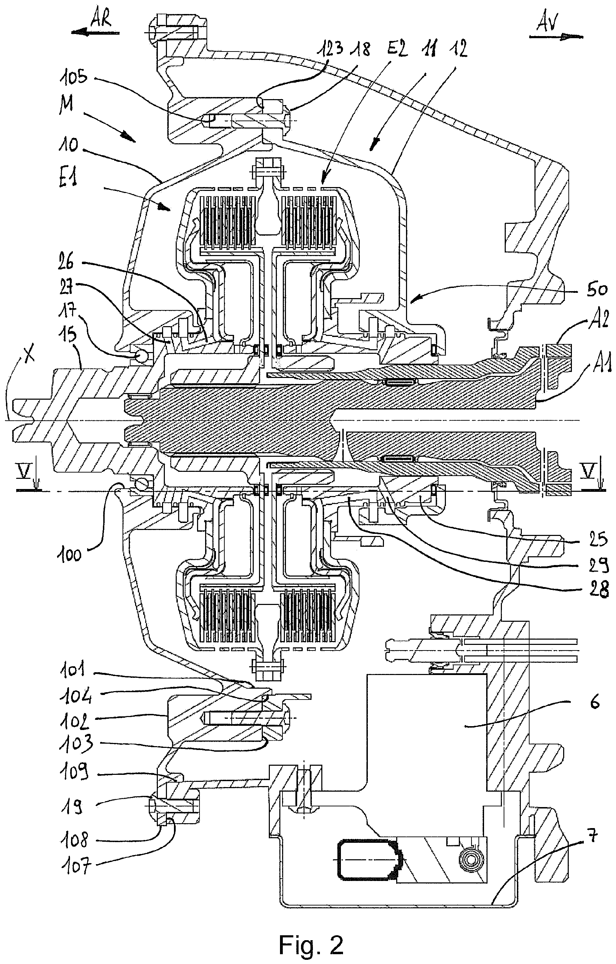

On a représenté sur les figures 2 à 5, le module de transmission de couple M selon un premier mode de mise en oeuvre privilégié de l'invention. Le module comprend :
- un couvercle 10,
- un mécanisme 11 à double embrayage humide mobile en rotation autour d'un axe X, et
- un carter d'embrayage 12, comportant un dispositif de distribution d'huile 50 destiné à alimenter le double embrayage humide en huile sous la commande de la servocommande 6.

Le couvercle 10 et le carter d'embrayage 12 sont en forme générale de cloche. Le couvercle 10 et le carter d'embrayage 12 sont assemblés de manière à former un boîtier définissant un logement dans lequel est reçu en partie le mécanisme 11 à double embrayage humide. Le couvercle 10 et le carter d'embrayage 12 sont fabriqués en utilisant des procédés de fonderie.

Le mécanisme 11 à double embrayage humide comporte un arbre cannelé 15 d'entrée de couple qui s'étend axialement vers l'extérieur du module M et traverse le couvercle 10 par une première ouverture 100 située sur le sommet du couvercle. L'arbre cannelé 15 d'entrée de couple est guidé en rotation sur le couvercle 10 par l'intermédiaire d'un roulement à bille 17. Le roulement à bille 17 assure l'étanchéité en huile sur la partie arrière du module de transmission de couple M. L'arbre cannelé 15 est un exemple de moyeu de transmission de couple qui supporte radialement les embrayages du mécanisme 11 à double embrayage humide.

Le couvercle 10 présente une deuxième ouverture 101 délimitée sur son bord par une deuxième couronne annulaire 102 et située sur l'embase du couvercle. La deuxième couronne annulaire 102 présente une section massive destinée à apporter de la rigidité au couvercle 10. Une zone d'appui 103 circulaire est aménagée sur la couronne annulaire 102. Elle est agencée pour venir en appui sur une première zone d'appui 123 du carter d'embrayage 12 de la transmission de véhicule automobile. La zone d'appui 103 comporte également une surface cylindrique externe de centrage 104 du couvercle sur le carter d'embrayage suivant l'axe X.

Le couvercle 10 et le carter d'embrayage 12 sont liés entre eux par l'intermédiaire du serrage d'une série de premières vis de fixation 18. La série de premières vis de fixation 18 est répartie circonférentiellement autour de l'axe X sur la périphérie du couvercle 10 et du carter d'embrayage 12. La deuxième couronne annulaire 102 présente une série de trous taraudés 105 apte à recevoir la série de premières vis de fixation 18.

Le module de transmission de couple M a notamment pour fonction de contenir le volume d'huile nécessaire au fonctionnement du mécanisme 11 à double embrayage humide. Un joint d'étanchéité est disposé entre le couvercle 10 et le carter d'embrayage 12 et écrasé par le serrage de la série de premières vis de fixation 18. Le joint d'étanchéité peut être du type joint torique ou joint plat.

Le mécanisme 11 à double embrayage humide comporte également un moyeu central 25 qui supporte en rotation le mécanisme 11 à double embrayage humide par l'intermédiaire de roulements à aiguille.

Le mécanisme 11 à double embrayage humide est commandé pour accoupler sélectivement ledit arbre menant à un premier arbre A1 mené et à un deuxième A2 arbre mené de la boite de vitesses.

De préférence, le premier arbre A1 mené et le deuxième A2 arbre mené sont coaxiaux.

Le mécanisme 11 à double embrayage humide comporte au moins un premier embrayage E1 et un deuxième embrayage E2, qui sont respectivement de type multidisques.

Le premier arbre A1 mené est entraîné en rotation lorsque ledit premier embrayage E1 est fermé et le deuxième A2 arbre mené est entraîné en rotation lorsque ledit deuxième embrayage E2 est fermé, lesdits premier et deuxième arbres A1, A2 menés étant respectivement reliés à une boîte de vitesses équipant le véhicule automobile.

Le premier embrayage E1 est par exemple agencé axialement à l'avant du côté de la boîte de vitesses et le deuxième embrayage E2 est par exemple agencé axialement à l'arrière du côté du moteur. Le premier embrayage E1 et le deuxième embrayage E2 transmettent alternativement la puissance d'entrée (le couple et la vitesse) de l'arbre menant, que reçoit l'arbre cannelé 15 d'entrée de couple du mécanisme 11, à l'un des deux arbres A1, A2 menés, en fonction de l'état ouvert ou fermé de chacun des embrayages E1 et E2.

De préférence, le premier embrayage E1 et le deuxième embrayage E2 sont à l'état ouvert, encore dit « normalement ouvert », et sont actionnés sélectivement en fonctionnement par une servocommande 6 pour passer de l'état ouvert à l'état fermé.

Le mécanisme 11 à double embrayage humide est commandé hydrauliquement par l'intermédiaire d'un fluide sous pression, généralement de l'huile.

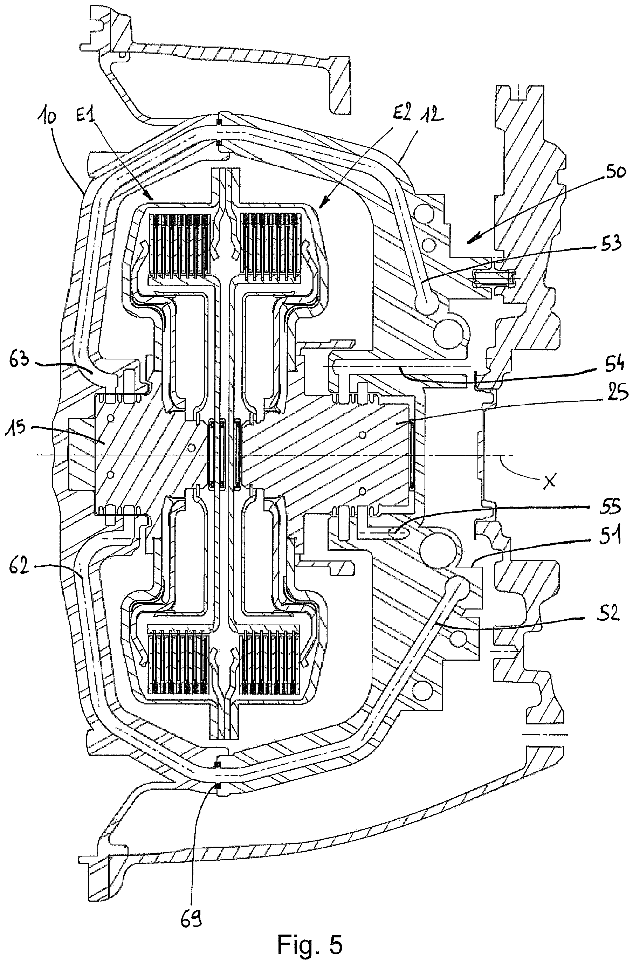

Pour commander sélectivement le changement d'état du premier embrayage E1 et du deuxième embrayage E2 du mécanisme 11 du module de transmission de couple M, le dispositif de distribution d'huile 50 utilise des réseaux d'alimentation en huile distincts (figure 5).

Pour l'alimentation en huile haute pression du premier embrayage E1, le réseau d'alimentation comprend un premier canal 52 d'alimentation en huile formé dans le carter d'embrayage 12 qui communique avec une première canalisation 62 d'huile formée dans le couvercle 10. La première canalisation 62 d'huile débouche dans une gorge circulaire aménagée dans l'arbre cannelé 15 qui communique avec un perçage 26 de circulation d'huile. L'arbre cannelé 15 peut comprendre plusieurs perçages 26 de circulation d'huile répartis circonférentiellement autour de l'axe X.

Le perçage 26 de circulation d'huile alimente la chambre de commande du premier embrayage E1 en huile haute pression.

Pour l'alimentation en huile basse pression du premier embrayage E1, le réseau d'alimentation comprend un deuxième canal 53 d'alimentation en huile formé dans le carter d'embrayage 12 qui communique avec une deuxième canalisation 63 d'huile formée dans le couvercle 10. La deuxième canalisation 63 d'huile débouche dans une autre gorge circulaire aménagée dans l'arbre cannelé 15 qui communique avec un perçage 27 de circulation d'huile réalisé dans l'arbre cannelé 15. L'arbre cannelé 15 peut comprendre plusieurs perçages 27 de circulation d'huile répartis circonférentiellement autour de l'axe X.

Le perçage 27 de circulation d'huile alimente la chambre d'équilibrage du premier embrayage E1 en huile basse pression.

Ainsi, les deux gorges circulaires de l'arbre cannelé 15 sont disposées axialement en regard des perçages 26, 27 de manière à alimenter séparément les chambres de commande et d'équilibrage du piston hydraulique de l'embrayage E1. Un joint d'étanchéité est disposé entre chaque gorge de manière à assurer l'étanchéité entre les différents perçages de circulation d'huile haute et basse pression. Le joint d'étanchéité est généralement de type torique.

Pour l'alimentation en huile haute pression du deuxième embrayage E2, le réseau d'alimentation comprend un troisième canal 54 d'alimentation en huile formé dans le carter d'embrayage 12 qui débouche dans un perçage 28 de circulation d'huile réalisés dans le moyeu central 25. Le moyeu central 25 peut comprendre plusieurs perçages 28 de circulation d'huile répartis circonférentiellement autour de l'axe X. Les perçages 28 de circulation d'huile sont reliés entre eux au moyen d'une gorge circulaire située sur la périphérie du moyeu central 25.

Le perçage 28 de circulation d'huile alimente la chambre de commande du deuxième embrayage E2.

Pour l'alimentation en huile basse pression du deuxième embrayage E2, le réseau d'alimentation comprend un quatrième canal 55 d'alimentation en huile formé dans le carter d'embrayage 12 qui débouche dans un perçage 29 de circulation d'huile réalisés dans le moyeu central 25. Le moyeu central 25 peut comprendre plusieurs perçages 29 de circulation d'huile répartis circonférentiellement autour de l'axe X. Les perçages 29 de circulation d'huile sont reliés entre eux au moyen d'une gorge circulaire située sur la périphérie du moyeu central 25.

Le perçage 29 de circulation d'huile alimente la chambre d'équilibrage du deuxième embrayage E2.

De part cette architecture, le premier embrayage E1 est alimenté en huile à partir de canaux d'alimentation en huile formés dans le carter d'embrayage 12 qui communiquent avec des canalisations d'huile formées directement dans le couvercle 10. Le deuxième embrayage E2 est quant à lui alimenté uniquement à partir de canaux d'alimentation en huile formés dans le carter d'embrayage 12. De cette manière, l'alimentation en huile du premier embrayage E1 est séparée du mécanisme 11 à double embrayage humide. De même, l'alimentation en huile du premier embrayage E1 est séparée de la cloche d'embrayage 5 de la transmission.

Comme illustré sur la figure 5, les première et deuxième canalisations 62, 63 d'huile haute et basse pression s'étendent transversalement le long de la paroi du couvercle 10. Les parois de canalisations 62, 63 d'huile sont formées sur la paroi externe du couvercle à partir d'un procédé de fabrication de type moulage. Les canalisations d'huile peuvent avoir ainsi des formes complexes. En variante, les canalisations 62, 63 d'huile peuvent être usinées.

Dans le premier exemple de mise en œuvre de l'invention, les canalisations 62, 63 d'huile s'étendent de part et d'autre du couvercle 10 et se raccordent aux canaux 52, 53 d'alimentation en huile au niveau du plan de liaison du carter d'embrayage 12 et du couvercle 10. Les raccords entre canaux d'alimentation en huile et canalisations d'huile sont rendus étanches au moyen de joints d'étanchéité 69. Les joints d'étanchéités 69 sont écrasés par le serrage de la série de premières vis de fixation 18. Les joints d'étanchéité 69 sont des joints toriques qui entourent les canalisations d'huile. En variante, le joint d'étanchéité peut être un joint plat.

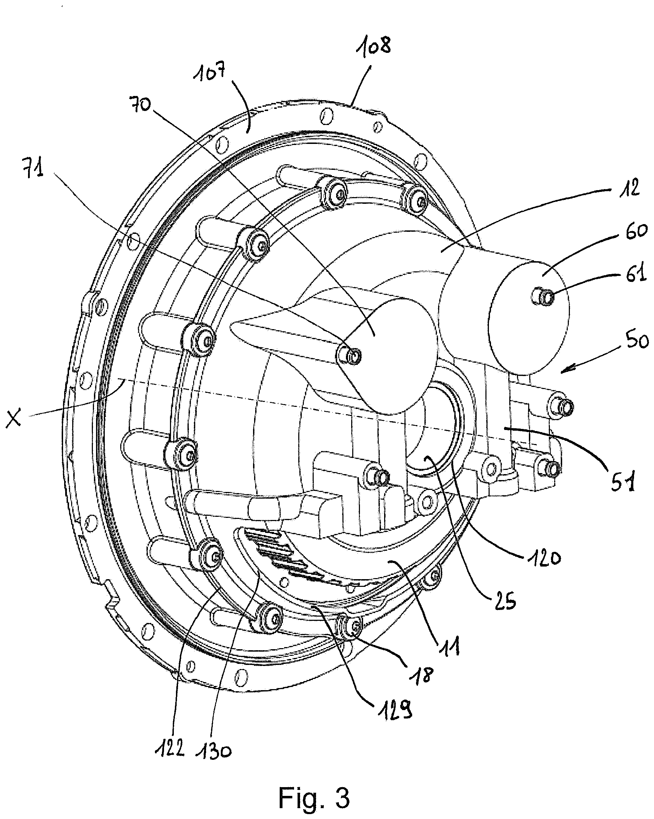

On a représenté sur la figures 3, le carter d'embrayage 12, comportant un dispositif de distribution d'huile 50 destiné à alimenter le double embrayage humide en huile. Le dispositif de distribution d'huile 50 comporte lui-même une boite de dérivation d'huile 51 supportée par le carter d'embrayage 12.

Le carter d'embrayage 12 présente également une première ouverture 120 située sur le sommet du carter d'embrayage et agencée pour le passage des arbres de la boite de vitesses de la transmission de véhicule automobile.

Comme illustré sur la figure 3, la boite de dérivation d'huile 51 entoure partiellement la première ouverture 120 du carter d'embrayage. Les canaux d'alimentation en huile 52, 53, 54 et 55 sont formés dans la boite de dérivation d'huile 51.

Les canaux d'alimentation en huile 52, 53, 54 et 55 sont réalisés par des moyens d'usinage de type perçage ou fraisage. De manière alternative, les canaux d'alimentations en huile 52, 53, 54 et 55 sont réalisés par des moyens de fonderie.

Le dispositif de distribution d'huile 50 tel que représenté sur la figure 3 comprend deux pompes 60, 70 supportées par le carter d'embrayage 12. Les pompes 60, 70 sont fixées directement sur le carter d'embrayage 12 à l'aide de vis de fixation.

La pompe 70 est ici du type basse pression avec comme fonction principale de prélever de l'huile depuis le fond du carter d'huile 7 et de la refouler jusqu'à un circuit de refroidissement situé en dehors de la cloche d'embrayage 5.

La compréhension du fonctionnement du circuit de circulation d'huile à basse pression sera plus facile à la lecture du paragraphe suivant :
L'huile est aspirée depuis le fond du carter d'huile 7 par la pompe 70 basse pression à l'aide d'un tuyau (non représenté) plongeant dans le réservoir d'huile. Le tuyau est relié à un connecteur hydraulique d'entrée de la pompe basse pression. La pompe basse pression 70 refoule l'huile en direction d'un échangeur thermique par l'intermédiaire d'un connecteur de sortie 71. L'huile refroidie sous l'action de l'échangeur thermique revient dans la boite de dérivation d'huile 51 par l'intermédiaire d'un connecteur d'entrée situé en dessous de la boite de dérivation. L'huile refroidie circule dans la boite de distribution d'huile 51 avant d'être envoyée directement dans la servocommande 6.

La pompe 60 est ici du type haute pression avec comme principale fonction de prélever de l'huile depuis le fond du carter d'huile 7 et de la refouler jusqu'à un filtre à huile situé en dehors de la cloche d'embrayage 5.

La compréhension du fonctionnement du circuit de circulation d'huile à haute pression sera plus facile à la lecture du paragraphe suivant :
L'huile est aspirée depuis le fond du carter d'huile 7 par la pompe 60 haute pression à l'aide d'un tuyau (non représenté) plongeant dans le réservoir d'huile. Le tuyau est relié à un connecteur hydraulique d'entrée de la pompe haute pression. La pompe haute pression 60 refoule l'huile en direction tout d'abord d'un filtre à huile par l'intermédiaire d'un connecteur de sortie 61. L'huile filtrée en raison de son passage dans le filtre à huile revient dans la boite de dérivation d'huile 51 par l'intermédiaire d'un connecteur d'entrée situé en dessous de la boite de dérivation. L'huile filtrée circule dans la boite de dérivation d'huile 51 avant d'être envoyée directement dans la servocommande 6.

La servocommande 6 a pour principale fonction de piloter l'alimentation en huile des chambres de piston hydraulique des embrayages E1 et E2. Pour cela, la servocommande 6 envoie de l'huile sous pression dans chacun des canaux 52, 53, 54 et 55 de la boite de dérivation d'huile 51.

La boite de dérivation d'huile 51 comporte également un connecteur d'entrée d'huile relié à un accumulateur d'huile situé en dehors de la cloche d'embrayage 5. L'huile circulant dans la boite de dérivation 51 en provenance de l'accumulateur est dirigée vers la servocommande 6.

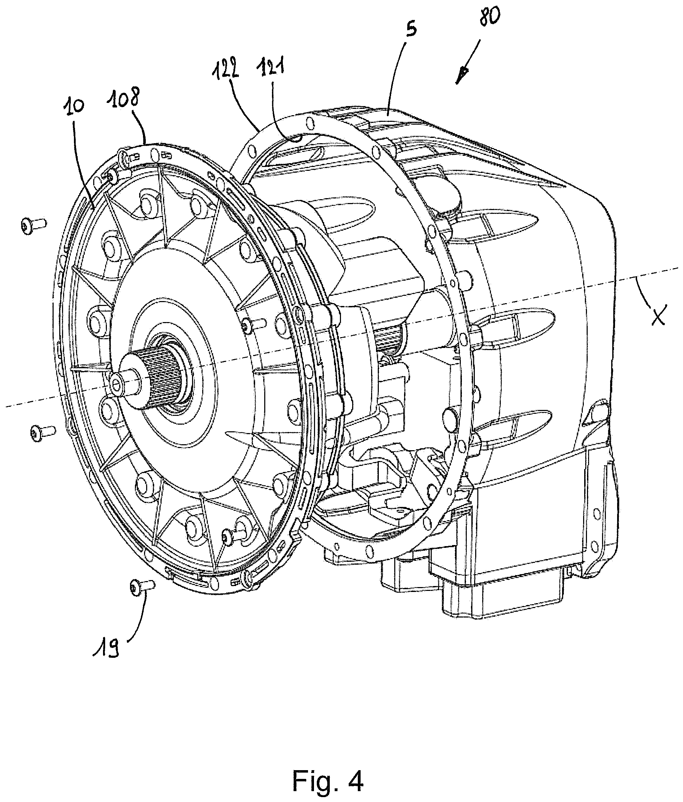

On a représenté sur la figure 4, un ensemble de transmission 80, comportant la cloche d'embrayage 5 et le module de transmission de couple M selon le premier mode de mise en œuvre privilégié de l'invention.

Le couvercle 10 comporte une première zone d'appui 107 circulaire, aménagée sur une couronne annulaire 108 externe et agencée pour venir en appui sur la cloche d'embrayage 5 de la transmission de véhicule automobile.

La première zone d'appui 107 du couvercle comporte une surface cylindrique externe de centrage 109 du couvercle sur la cloche d'embrayage suivant l'axe X.

Le module de transmission de couple M et la cloche d'embrayage 5 sont liés entre eux par l'intermédiaire du serrage d'une série de deuxièmes vis de fixation 19. La série de deuxièmes vis de fixation 19 est répartie circonférentiellement autour de l'axe X sur la périphérie du couvercle 10.

L'ensemble de transmission 80 a notamment pour fonction de contenir le volume d'huile nécessaire au fonctionnement du module de transmission de couple M. Un joint d'étanchéité est disposé entre le module de transmission de couple M et la cloche d'embrayage 5 de la transmission de véhicule automobile et écrasé par le serrage de la série de deuxièmes vis de fixation 19.

Comme illustré sur les figures 2 et 5, le carter d'embrayage 12, en forme générale de cloche, présente une deuxième ouverture 121 délimitée sur son bord par une couronne annulaire 122 et située sur l'embase du carter d'embrayage. Les première et deuxième ouvertures 120, 121 du carter d'embrayage sont circulaires et concentriques autour de l'axe X.

Comme illustré sur la figure 3, le carter d'embrayage 12 présente également une troisième ouverture 129, en forme générale d'arc de cercle, aménagée sur le flan du carter d'embrayage. Cette troisième ouverture 129 ne débouche pas dans les première et deuxième ouvertures 120, 121 du carter d'embrayage. Le bord radialement externe 130 qui délimite la troisième ouverture 129 est tangent à la couronne annulaire 122. La troisième ouverture 129 est située dans la partie inférieure du carter d'embrayage dans une zone où l'huile contenue dans le module de transmission de couple vient reposer sous l'effet de la gravité. Afin d'éviter la stagnation de l'huile dans cette zone, le bord radialement externe 130 de la troisième ouverture est disposé par rapport à l'axe de rotation X sur un diamètre supérieur ou égal à l'enveloppe externe du mécanisme à double embrayage humide. L'huile peut alors se déverser plus facilement dans le fond du carter d'huile 7. La forme décrite de la troisième ouverture 129 n'est pas limitative. La troisième ouverture 129 peut être remplacée par une série d'ouvertures, de type trous de perçage, aménagées en bordure de la couronne annulaire 122.

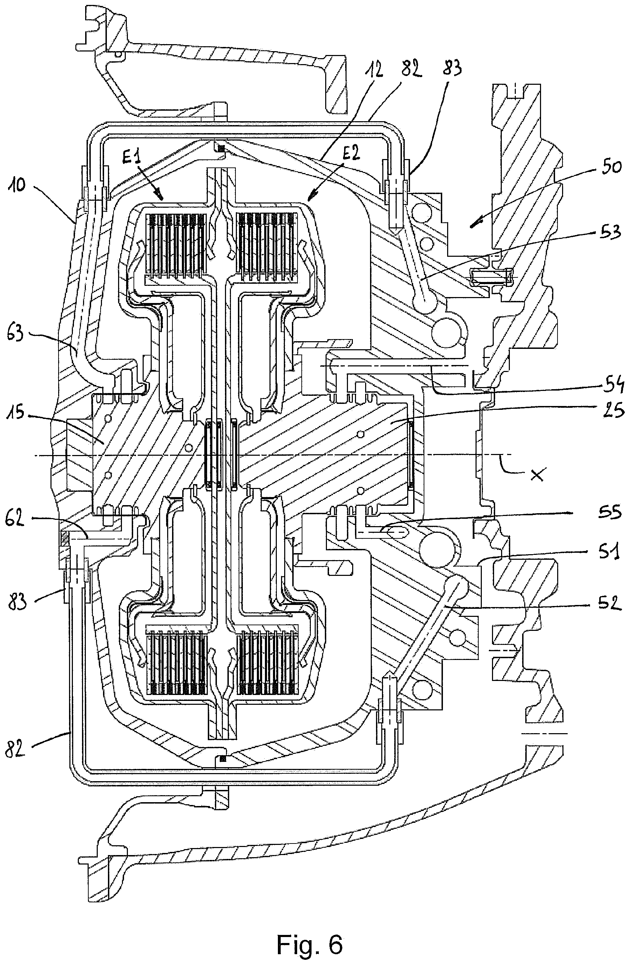

On a représenté sur la figure 6, le module de transmission de couple M selon un deuxième mode de mise en œuvre privilégié de l'invention. Ce deuxième mode de mise en œuvre diffère de celui exposé en référence aux figures 2 à 5 en ce que les canaux d'alimentation 52, 53 en huile haute et basse pression formés dans le carter d'embrayage 12 communiquent avec des canalisations 62, 63 d'huile formées seulement en partie dans le couvercle 10.

Dans ce deuxième exemple de mise en œuvre de l'invention, le canal 52 d'alimentation en huile haute pression communique avec la canalisation 62 d'huile haute pression par l'intermédiaire d'une conduite d'huile 82 externe. Cette conduite d'huile 82 externe est raccordée aux extrémités du canal d'alimentation et de la canalisation d'huile à l'aide de raccords amovibles 83. Par exemple, la conduite d'huile peut comprendre des raccords à encliquetage 83.

De même, le canal 53 d'alimentation en huile basse pression communique avec la canalisation 63 d'huile basse pression par l'intermédiaire d'une conduite d'huile 82 externe.

Les conduites 82 d'huile sont à base de matériaux plastiques et peuvent comprendre des renforts métalliques. Afin d'améliorer le débit au sein de la conduite d'huile, le matériau peut comprendre du silicone.

Dans cet exemple, les conduites 82 d'huiles s'étendent de part et d'autre du couvercle 10 et passent au travers du plan de liaison du carter d'embrayage 12 et du couvercle 10.

Dans les exemples de mise en œuvre de l'invention présentés aux figures 1 à 6, les canalisations d'huile sont formées sur la paroi extérieure du couvercle 10. En variante, les parois des canalisations d'huile peuvent être formées en tout ou partie sur la paroi interne du couvercle.

L'invention n'est cependant pas limitée aux exemples de mise en œuvre qui viennent d'être décrit.

## Revendications

1. Module de transmission de couple (M) destiné à équiper une transmission (1) de véhicule automobile, comprenant:
- un couvercle (10),
- un mécanisme (11) à double embrayage humide mobile en rotation autour d'un axe (X), et
- un carter d'embrayage (12), comportant un dispositif de distribution d'huile destiné à alimenter le double embrayage humide en huile,
le couvercle (10) et le carter d'embrayage (12) étant assemblés de manière à former un boîtier définissant un logement dans lequel est reçu en partie le mécanisme à double embrayage humide, le boîtier étant apte à être reçu en tout ou partie dans une cloche d'embrayage (5) de la transmission,
**caractérisé en ce que** le mécanisme à double embrayage est alimenté en huile à partir d'au moins un canal (52, 53) d'alimentation en huile formé dans le carter d'embrayage (12) qui communique avec au moins une canalisation (62, 63) d'huile formée en tout ou partie dans le couvercle (10).

2. Module de transmission de couple (M) selon la revendication 1, **caractérisé en ce que** le mécanisme (11) à double embrayage humide comprend un premier embrayage (E1) et un deuxième embrayage (E2) respectivement de type multidisques, commandés pour accoupler sélectivement un arbre menant à un premier arbre mené et à un deuxième arbre mené, les premier et deuxième embrayages étant disposés axialement l'un à coté de l'autre,
le premier embrayage (E1) étant alimenté en huile à partir d'une canalisation (62, 63) d'huile du couvercle (10) et le deuxième embrayage (E2) étant alimenté en huile à partir d'un canal (54, 55) d'alimentation en huile du carter d'embrayage.

3. Module de transmission de couple (M) selon la revendication 2, **caractérisé en ce que** le premier embrayage (E1) est alimenté en huile haute pression à partir d'un premier canal (52) d'alimentation en huile du carter d'embrayage (12) qui communique avec une première canalisation (62) d'huile du couvercle (10).

4. Module de transmission de couple (M) selon la revendication 2 ou 3, **caractérisé en ce que** le premier embrayage (E1) est alimenté en huile basse pression à partir d'un deuxième canal (53) d'alimentation en huile du carter d'embrayage (12) qui communique avec une deuxième canalisation (63) d'huile du couvercle (10).

5. Module de transmission de couple (M) selon la combinaison des revendications 3 et 4, **caractérisé en ce que** les canalisations (62, 63) d'huile haute et basse pression s'étendent transversalement le long de la paroi du couvercle.

6. Module de transmission de couple (M) selon la combinaison des revendications 3 et 4, **caractérisé en ce que** les canalisations (62, 63) d'huile haute et basse pression s'étendent transversalement de part et d'autre du couvercle (10).

7. Module de transmission de couple (M) selon l'une quelconque des revendications précédentes, **caractérisé en ce que** le mécanisme (11) à double embrayage humide comporte un arbre cannelé (15) d'entrée de couple s'étendant axialement vers l'extérieur du module (M) et traversant le couvercle (10), ledit arbre cannelé (15) d'entrée de couple comportant au moins un perçage (26, 27) de circulation d'huile communiquant avec une canalisation (62, 63) d'huile du couvercle.

8. Module de transmission de couple (M) selon l'une quelconque des revendications précédentes, **caractérisé en ce que** la paroi de la canalisation (62, 63) d'huile est formée en tout ou partie sur la paroi externe du couvercle (10).

9. Module de transmission de couple (M) selon l'une quelconque des revendications 1 à 7, **caractérisé en ce que** la paroi de la canalisation (62, 63) d'huile est formée en tout ou partie sur la paroi interne du couvercle (10).

10. Module de transmission de couple (M) selon l'une quelconque des revendications précédentes, **caractérisé en ce que** le canal (52, 53) d'alimentation en huile et la canalisation (62, 63) d'huile sont raccordées au niveau du plan de liaison du carter d'embrayage (12) et du couvercle (10).

11. Module de transmission de couple (M) selon la revendication précédente, **caractérisé en ce que** le raccord du canal (52, 53) d'alimentation en huile et de la canalisation (62, 63) d'huile est rendu étanche au moyen d'un joint d'étanchéité.

12. Module de transmission de couple (M) selon l'une quelconque des revendications 1 à 4, **caractérisé en ce que** le canal (52, 53) d'alimentation en huile et la canalisation (62, 63) d'huile communiquent ensemble par l'intermédiaire d'une conduite d'huile (82) externe et raccordée aux extrémités du canal d'alimentation et de la canalisation d'huile.

13. Module de transmission de couple (M) selon la revendication précédente, **caractérisé en ce que** la conduite d'huile (82) externe passe au travers du plan de liaison du carter d'embrayage (12) et du couvercle (10).

14. Module de transmission de couple (M) selon l'une quelconque des revendications précédentes, **caractérisé en ce que** la canalisation (62, 63) d'huile est obtenue directement de moulage, par exemple par fonderie avec noyaux de sable ou par fonderie à la cire perdue.

15. Ensemble de transmission (80), notamment pour un véhicule automobile, comportant au moins :
- une cloche d'embrayage (5), et
- un module de transmission de couple (M) selon l'une quelconque des revendications précédentes, dans lequel le couvercle (10) comporte une zone d'appui aménagée sur la périphérie externe du couvercle et venant en appui sur la cloche d'embrayage (5).

## Patentansprüche

1. Drehmoment-Übertragungsmodul (M), das dazu bestimmt ist, ein Getriebe (1) eines Kraftfahrzeugs zu bestücken, das enthält:
- einen Deckel (10),
- einen Mechanismus (11) mit Doppelnasskupplung, der um eine Achse (X) drehbeweglich ist, und
- ein Kupplungsgehäuse (12), das eine Ölverteilungsvorrichtung aufweist, die dazu bestimmt ist, die Doppelnasskupplung mit Öl zu versorgen,
wobei der Deckel (10) und das Kupplungsgehäuse (12) so zusammengebaut sind, dass sie ein Gehäuse bilden, das eine Aufnahme definiert, in der der Mechanismus mit Doppelnasskupplung zum Teil aufgenommen wird, wobei das Gehäuse ganz oder teilweise in einer Kupplungsglocke (5) des Getriebes aufgenommen werden kann,
**dadurch gekennzeichnet, dass** der Mechanismus mit Doppelkupplung ausgehend von mindestens einem im Kupplungsgehäuse (12) ausgebildeten Ölversorgungskanal (52, 53) mit Öl versorgt wird, der mit mindestens einem Ölrohr (62, 63) in Verbindung steht, das ganz oder teilweise im Deckel (10) ausgebildet ist.

2. Drehmoment-Übertragungsmodul (M) nach Anspruch 1, **dadurch gekennzeichnet, dass** der Mechanismus (11) mit Doppelnasskupplung eine erste Kupplung (E1) und eine zweite Kupplung (E2) je von der Art Mehrscheibenkupplung enthält, die gesteuert werden, um selektiv eine Antriebswelle mit einer ersten Abtriebswelle und mit einer zweiten Abtriebswelle zu koppeln, wobei die erste und die zweite Kupplung axial nebeneinander angeordnet sind,
wobei die erste Kupplung (E1) ausgehend von einem Ölrohr (62, 63) des Deckels (10) mit Öl versorgt wird, und die zweite Kupplung (E2) ausgehend von einem Ölversorgungskanal (54, 55) des Kupplungsgehäuses mit Öl versorgt wird.

3. Drehmoment-Übertragungsmodul (M) nach Anspruch 2, **dadurch gekennzeichnet, dass** die erste Kupplung (E1) ausgehend von einem ersten Ölversorgungskanal (52) des Kupplungsgehäuses (12) mit Hochdrucköl versorgt wird, der mit einem ersten Ölrohr (62) des Deckels (10) in Verbindung steht.

4. Drehmoment-Übertragungsmodul (M) nach Anspruch 2 oder 3, **dadurch gekennzeichnet, dass** die erste Kupplung (E1) ausgehend von einem zweiten Ölversorgungskanal (53) des Kupplungsgehäuses (12) mit Niederdrucköl versorgt wird, der mit einem zweiten Ölrohr (63) des Deckels (10) in Verbindung steht.

5. Drehmoment-Übertragungsmodul (M) nach der Kombination der Ansprüche 3 und 4, **dadurch gekennzeichnet, dass** die Hochdrucköl- und Niederdruckölrohre (62, 63) sich quer entlang der Wand des Deckels erstrecken.

6. Drehmoment-Übertragungsmodul (M) nach der Kombination der Ansprüche 3 und 4, **dadurch gekennzeichnet, dass** die Hochdrucköl- und Niederdruckölrohre (62, 63) sich quer zu beiden Seiten des Deckels (10) erstrecken.

7. Drehmoment-Übertragungsmodul (M) nach einem der vorhergehenden Ansprüche, **dadurch gekennzeichnet, dass** der Mechanismus (11) mit Doppelnasskupplung eine Drehmoment-Eingangskeilwelle (15) aufweist, die sich axial zur Außenseite des Moduls (M) erstreckt und den Deckel (10) durchquert, wobei die Drehmoment-Eingangskeilwelle (15) mindestens eine Ölkreislaufbohrung (26, 27) aufweist, die mit einem Ölrohr (62, 63) des Deckels kommuniziert.

8. Drehmoment-Übertragungsmodul (M) nach einem der vorhergehenden Ansprüche, **dadurch gekennzeichnet, dass** die Wand des Ölrohrs (62, 63) ganz oder zum Teil an der Außenwand des Deckels (10) ausgebildet ist.

9. Drehmoment-Übertragungsmodul (M) nach einem der Ansprüche 1 bis 7, **dadurch gekennzeichnet, dass** die Wand des Ölrohrs (62, 63) ganz oder zum Teil an der Innenwand des Deckels (10) ausgebildet ist.

10. Drehmoment-Übertragungsmodul (M) nach einem der vorhergehenden Ansprüche, **dadurch gekennzeichnet, dass** der Ölversorgungskanal (52, 53) und das Ölrohr (62, 63) im Bereich der Verbindungsebene des Kupplungsgehäuses (12) und des Deckels (10) verbunden sind.

11. Drehmoment-Übertragungsmodul (M) nach dem vorhergehenden Anspruch, **dadurch gekennzeichnet, dass** die Verbindung des Ölversorgungskanals (52, 53) und des Ölrohrs (62, 63) mittels einer Dichtung abgedichtet wird.

12. Drehmoment-Übertragungsmodul (M) nach einem der Ansprüche 1 bis 4, **dadurch gekennzeichnet, dass** der Ölversorgungskanal (52, 53) und das Ölrohr (62, 63) miteinander über eine äußere Ölleitung (82) verbunden sind, die mit den Enden des Versorgungskanals und des Ölrohrs verbunden ist.

13. Drehmoment-Übertragungsmodul (M) nach dem vorhergehenden Anspruch, **dadurch gekennzeichnet, dass** die äußere Ölleitung (82) durch die Verbindungsebene des Kupplungsgehäuses (12) und des Deckels (10) verläuft.

14. Drehmoment-Übertragungsmodul (M) nach einem der vorhergehenden Ansprüche, **dadurch gekennzeichnet, dass** das Ölrohr (62, 63) direkt durch Formguss erhalten wird, zum Beispiel Sandkern-Gießerei oder Wachsausschmelz-Gießerei.

15. Getriebeeinheit (80), insbesondere für ein Kraftfahrzeug, die mindestens aufweist:
- eine Kupplungsglocke (5), und
- ein Drehmoment-Übertragungsmodul (M) nach einem der vorhergehenden Ansprüche, wobei der Deckel (10) eine Auflagezone aufweist, die am Außenumfang des Deckels eingerichtet ist und auf der Kupplungsglocke (5) in Auflage kommt.

## Claims

1. Torque transmission module (M) intended to equip a motor vehicle transmission (1), comprising:
- a cover (10),
- a wet double clutch mechanism (11) which is rotatable about an axis (X), and
- a clutch case (12), comprising an oil distribution device intended to supply the wet double clutch with oil,
the cover (10) and the clutch case (12) being assembled so as to form a casing defining a housing in which the wet double clutch mechanism is partly received, the casing being able to be received completely or partly in a clutch bell (5) of the transmission,
**characterized in that** the double clutch mechanism is supplied with oil from at least one oil supply duct (52, 53) formed in the clutch case (12), which communicates with at least one oil line (62, 63) formed completely or partly in the cover (10).

2. Torque transmission module (M) according to Claim 1, **characterized in that** the wet double clutch mechanism (11) comprises a first clutch (E1) and a second clutch (E2) respectively of the multi-disc type, which are controlled to selectively couple a driving shaft to a first driven shaft and to a second driven shaft, the first and second clutches being arranged axially one beside the other,
the first clutch (E1) being supplied with oil from an oil line (62, 63) of the cover (10), and the second clutch (E2) being supplied with oil from an oil supply duct (54, 55) of the clutch case.

3. Torque transmission module (M) according to Claim 2, **characterized in that** the first clutch (E1) is supplied with high-pressure oil from a first oil supply duct (52) of the clutch case (12), which communicates with a first oil line (62) of the cover (10) .

4. Torque transmission module (M) according to Claim 2 or 3, **characterized in that** the first clutch (E1) is supplied with low-pressure oil from a second oil supply duct (53) of the clutch case (12), which communicates with a second oil supply line (63) of the cover (10).

5. Torque transmission module (M) according to the combination of Claims 3 and 4, **characterized in that** the high-pressure and low-pressure oil lines (62, 63) extend transversely along the wall of the cover.

6. Torque transmission module (M) according to the combination of Claims 3 and 4, **characterized in that** the high-pressure and low-pressure oil lines (62, 63) extend transversely on either side of the cover (10) .

7. Torque transmission module (M) according to any one of the preceding claims, **characterized in that** the wet double clutch mechanism (11) comprises a splined torque input shaft (15) extending axially towards the outside of the module (M) and passing through the cover (10), said splined torque input shaft (15) comprising at least one oil circulation drilling (26, 27) communicating with an oil line (62, 63) of the cover.

8. Torque transmission module (M) according to any one of the preceding claims, **characterized in that** the wall of the oil line (62, 63) is formed completely or partly on the outer wall of the cover (10).

9. Torque transmission module (M) according to any one of Claims 1 to 7, **characterized in that** the wall of the oil line (62, 63) is formed completely or partly on the inner wall of the cover (10).

10. Torque transmission module (M) according to any one of the preceding claims, **characterized in that** the oil supply duct (52, 53) and the oil line (62, 63) are connected at the connection plane of the clutch case (12) and of the cover (10).

11. Torque transmission module (M) according to the preceding claim, **characterized in that** the connection of the oil supply duct (52, 53) and of the oil line (62, 63) is rendered leaktight by means a tightness seal.

12. Torque transmission module (M) according to any one of Claims 1 to 4, **characterized in that** the oil supply duct (52, 53) and oil line (62, 63) communicate together via an outer oil pipe (82) connected to the ends of the supply duct and of the oil line.

13. Torque transmission module (M) according to the preceding claim, **characterized in that** the outer oil pipe (82) passes through the connection plane of the clutch case (12) and of the cover (10).

14. Torque transmission module (M) according to any one of the preceding claims, **characterized in that** the oil line (62, 63) is obtained directly by moulding, for example by casting with sand cores or by lost-wax casting.

15. Transmission assembly (80), in particular for a motor vehicle, comprising at least:
- a clutch bell (5), and
- a torque transmission module (M) according to any one of the preceding claims, in which the cover (10) comprises a bearing region formed on the outer periphery of the cover and bearing on the clutch bell (5).
